# EUROPÄISCHE PATENTANMELDUNG

(11) **EP 4 685 928 A2**
(43) Veröffentlichungstag der Anmeldung: **28.01.2026**
(21) Anmeldenummer: 25191469.3
(22) Anmeldetag: 24.07.2025
(51) Int. Cl.: H01M 10/613, H01M 10/6557

(54) **BATTERIEMODUL UND ZELLTRENNELEMENT MIT KÜHLFUNKTION**

(30) Priorität: 26.07.2024 DE 102024121406
(71) Anmelder: Audi AG, 85045 Ingolstadt (DE)
(72) Erfinder: Emre, Onur, 85051 Ingolstadt (DE); Lorenz, Carsten, 85084 Reichertshofen (DE); Main, Eduard, 87740 Buxheim (DE)

(57) **Zusammenfassung**

Die Erfindung betrifft ein Zelltrennelement (16) zur Anordnung zwischen zwei Batteriezellen (14), das eine Außenwandung (22) umfasst, die einen Innenraum (24) umschließt, und die eine erste Außenwand (22a) und eine gegenüberliegende zweite Außenwand (22b) bereitstellt, einen im Innenraum (24) befindlichen ersten Kühlbereich (28), der an die erste Außenwand (22a) angrenzt, und der einen ersten Kühlkanal (38) umfasst, und einen im Innenraum (24) befindlichen zweiten Kühlbereich (30), der an die zweite Außenwand (22b) angrenzt, und der einen zweiten Kühlkanal (40) umfasst. Dabei umfasst das Zelltrennelement (16) eine im Innenraum (24) angeordnete Kompressionsschicht (26) aus einem elastisch deformierbaren Material, wobei die Kompressionsschicht (26) zwischen dem ersten und zweiten Kühlbereich (28, 30) angeordnet ist, und eine ihr zugeordnete erste Kompressibilität (K1) zumindest bezüglich der ersten Richtung (x) größer ist als eine jeweilige dem ersten und zweiten Kühlbereich (28, 30) zugeordnete zweite Kompressibilität (K2).

## Beschreibung

Die Erfindung betrifft ein Zelltrennelement zur Anordnung zwischen zwei Batteriezellen eines Zellstapels, wobei das Zelltrennelement eine Außenwandung umfasst, die einen Innenraum des Zelltrennelements umschließt, und die eine erste Außenwand und eine bezüglich einer ersten Richtung gegenüberliegende zweite Außenwand bereitstellt. Zudem umfasst das Zelltrennelement einen im Innenraum befindlichen ersten Kühlbereich, der an die erste Außenwand angrenzt, und der mindestens einen von einem Kühlmittel durchströmbaren ersten Kühlkanal umfasst, und einen im Innenraum befindlichen zweiten Kühlbereich, der an die zweite Außenwand angrenzt, und der mindestens einen von einem Kühlmittel durchströmbaren zweiten Kühlkanal umfasst. Des Weiteren betrifft die Erfindung auch ein Batteriemodul mit einem solchen Zelltrennelement.

Heutige Kühlsysteme für Batterien, insbesondere Hochvoltbatterien für Kraftfahrzeuge, greifen oftmals nur eine relativ kleine Fläche der Batteriezellen zum Kühlen ab, indem die Kühlsysteme unter und/oder über den Zellen beziehungsweise Zellstapeln positioniert sind. Außerdem zeigen Batteriezellen, zum Beispiel Lithium-Ionen-Zellen, über die Lebensdauer ein starkes Swellingverhalten, insbesondere alterungsbedingt und durch das Laden und Entladen der Batteriezellen bedingt. Dafür werden im Modul beziehungsweise im Zellstack, der auch als Zellstapel bezeichnet werden kann, im Gesamtsystem zwischen den Zellen Materialien eingesetzt, die das Swellingverhalten, insbesondere das An- und Abschwellen der Batteriezellen, abfangen können, indem sie komprimiert werden. Derartige Materialien können in Form von Zelltrennelementen bereitgestellt sein, die zwischen den Batteriezellen positioniert sind. Auch sind aus dem Stand der Technik Zelltrennelemente bekannt mittels welchen eine Kühlfunktion bereitstellen lässt.

Beispielsweise beschreibt die DE 10 2022 100 744 A1 ein Kühlelement mit einer Mehrzahl von elastischen Rohrelementen, die in einer Ebene verlaufend angeordnet sind, wobei die Rohrelemente für ein Fluid durchströmbar sind, zueinander beabstandet sind, und wobei zwischen den Rohrelementen ein kompressibles Material vorgesehen ist. Ein solches Kühlelement kann zur Anordnung zwischen zwei zueinander benachbarten Batteriezellen einer Stapelanordnung vorgesehen sein.

Die FR 3 135 566 A1 beschreibt einen Stromspeicher mit Batteriezellen, die nebeneinander durch einen Spalt voneinander getrennt angeordnet sind, wobei in jedem Spalt eine Trennstruktur vorgesehen ist, die mindestens einen Zirkulationskanal einer Wärmeübertragungsflüssigkeit begrenzt, die mit den größten Flächen der angrenzenden Batteriezellen in Kontakt steht, wobei die Trennstruktur ein komprimierbares Sandwich ist, die zwei Metallplatten umfasst, zwischen denen ein komprimierbares Material ist.

Die DE 10 2018 214 529 A1 beschreibt eine Akkumulatoranordnung mit mehreren Batteriezellen, die in Stapelrichtung zu einem Batterieblock gestapelt sind, und mit einer Kühlvorrichtung, die mehrere Kühlelemente, die von einem Kühlfluid durchströmbar sind, umfasst, die zwischen den benachbarten Batteriezellen angeordnet und mit diesen in Stapelrichtung verspannt sind. Dabei weist ein jeweiliges Kühlelement eine kompressible, porige Zwischeneinlage mit mehreren von dem Kühlfluid durchströmbaren Poren auf oder ist durch diese gebildet, wobei die Zwischeneinlage zwischen den jeweiligen benachbarten Batteriezellen angeordnet und mit diesen wärmeübertragend verbunden ist.

Des Weiteren beschreibt die DE 10 2020 118 002 A1 ein Batteriemodul mit mehreren Batteriezellen, zwischen denen jeweils verformbare Schaumplatten zum Ausgleich von Verformungen der Batteriezellen angeordnet sind. Zwischen je zwei benachbarten Batteriezellen kann zudem ein Kühlmedium zum Kühlen der Batteriezellen durchgeleitet werden Kühlmedium ist dabei eine Kühlflüssigkeit, die die Batteriezellen unmittelbar kontaktiert, wobei zwischen der jeweiligen Batteriezelle und der dieser zugewandten Schaumplatte eine Kühlungsstruktur zum Leiten der Kühlflüssigkeit zur Batteriezelle und entlang dieser angeordnet ist.

Die Integration von Kühlfunktionen in Zelltrennelemente ist jedoch mit Problemen verbunden: Sind die Zelltrennelemente beispielsweise als steife Kühlplatten ausgestaltet, so lässt sich durch diese das oben beschriebene Zellswelling nicht abfangen. Dies führt dazu, dass bei fehlendem Swellingausgleich die Batteriezellen vorzeitig altern. Bei zu weichen Kühlkörpern dagegen besteht das Risiko, dass diese durch die Swellingkräfte zusammengedrückt werden, und somit kein Kühlmedium mehr fließen kann, was eine Reduktion oder einen Verlust der Kühlleistung bedeutet. Ein mehrfach geschichteter Aufbau des Zelltrennelements beansprucht zudem relativ viel Bauraum zwischen den Batteriezellen.

Aufgabe der vorliegenden Erfindung ist es daher, ein Zelltrennelement und ein Batteriemodul bereitzustellen, die eine Integration einer möglichst zuverlässigen Kühlfunktion in ein Zelltrennelement erlauben, ohne auf einen gewissen Swellingausgleich verzichten zu müssen. Insbesondere ist es Aufgabe vorteilhafter Weiterbildungen der Erfindung, dies auf besonders bauraumsparende Weise zu ermöglichen.

Diese Aufgabe wird gelöst durch ein Zelltrennelement und ein Batteriemodul mit den Merkmalen gemäß den jeweiligen unabhängigen Patentansprüchen. Vorteilhafte Ausgestaltungen der Erfindung sind Gegenstand der abhängigen Patentansprüche, der Beschreibung sowie der Figuren.

Ein erfindungsgemäßes Zelltrennelement zur Anordnung zwischen zwei Batteriezellen eines Zellstapels umfasst eine Außenwandung, die einen Innenraum des Zelltrennelements umschließt, und die eine erste Außenwand und eine bezüglich einer ersten Richtung gegenüberliegende zweite Außenwand bereitstellt, einen im Innenraum befindlichen ersten Kühlbereich, der an die erste Außenwand angrenzt, und der mindestens einen von einem Kühlmittel durchströmbaren ersten Kühlkanal umfasst, und einen im Innenraum befindlichen zweiten Kühlbereich, der an die zweite Außenwand angrenzt, und der mindestens einen von einem Kühlmittel durchströmbaren zweiten Kühlkanal umfasst. Außerdem umfasst das Zelltrennelement eine im Innenraum angeordnete Kompressionsschicht aus einem elastisch deformierbaren Material, wobei die Kompressionsschicht bezüglich der ersten Richtung zwischen dem ersten und zweiten Kühlbereich angeordnet ist, und wobei eine der Kompressionsschicht zugeordnete erste Kompressibilität zumindest bezüglich der ersten Richtung größer ist als eine jeweilige dem ersten und zweiten Kühlbereich zugeordnete zweite Kompressibilität.

Dadurch, dass die der Kompressionsschicht zugeordnete Kompressibilität größer ist als die des ersten und zweiten Kühlbereichs, d.h. dass die Kompressionsschicht einfacher komprimiert werden kann als der erste und zweite Kühlbereich, kann durch Kompression der Kompressionsschicht ein Swellingausgleich bereitgestellt werden, ohne dass hierbei die Kühlbereiche signifikant komprimiert werden oder signifikant komprimiert werden. Dadurch kann die Kühlfunktion auch bei einem Anschwellen der Batteriezellen und bei Kompression des Zelltrennelements sicher gewährleistet werden. Durch die Komprimierbarkeit der Kompressionsschicht lässt sich das Zelltrennelement als Ganzes bezüglich der ersten Richtung komprimieren, wodurch das Zellswelling abgefangen werden kann, was sich wiederum positiv auf die Lebensdauer der Batteriezellen auswirkt. Hierdurch können also eine Kühlfunktion und eine Swellingkompensation in ein Zelltrennelement integriert werden, ohne dabei die Kühlfunktion zu beeinträchtigen.

Bezüglich einer bestimmungsgemäßen Einbaulage des Zelltrennelements in einem Zellstapel zwischen zwei Batteriezellen des Zellstapels korrespondiert die erste Richtung zu einer Stapelrichtung, in welcher die Batteriezellen des Zellstapels nebeneinander sind. Dabei sind die Batteriezellen im Zellstapel vorzugsweise mit ihren flächenmäßig größten Seiten einander zugewandt im Zellstapel angeordnet. Bei den Batteriezellen kann es sich zum Beispiel um prismatische Batteriezellen oder Pouchzellen handelt. Entsprechend ist es sehr vorteilhaft, wenn die durch die Außenwandung bereitgestellten Außenwände eben ausgeführt sind. Hierdurch können sie bezüglich ihrer bestimmungsgemäßen Einbaulage im Zellstapel flächig an den flächenmäßig größten Zellseiten der angrenzenden Batteriezellen anliegen. Dadurch kann eine besonders effiziente warme Abfuhr von den Batteriezellen an das Zelltrennelement bereitgestellt werden, und außerdem erlaubt dies eine besonders gleichmäßige Kraftverteilung über die Zellseiten der Batteriezellen beim Zellswelling hinweg.

Die der Kompressionsschicht und den jeweiligen Kühlbereichen zugeordnete Kompressibilität kann zum Beispiel als eine Streckenlänge definiert sein, um die die Kompressionsschicht beziehungsweise die Kühlbereiche bezogen auf einen Ausgangszustand unter Normalbedingungen bzw. Standardbedingungen bei einer bestimmten Druckbeaufschlagung bezüglich der ersten Richtung verringert wird. Der Ausgangszustand beziehungsweise der Referenzzustand kann für Normalbedingungen bzw. Standardbedingungen definiert sein. Diese können als ein Umgebungsdruck von 1013,25 mbar und als eine Temperatur von 20°C definiert sein.

Da die Kompressibilität der Kompressionsschicht größer ist als die der Kühlbereiche, weist die Kompressionsschicht also ein Kompressionsmodul auf, das kleiner ist als das der Kühlbereiche. Die Kompressionsschicht ist also zum Beispiel weicher und/oder nachgiebiger als die jeweiligen Kühlbereiche. Diese können insbesondere inkompressibel in der ersten Richtung bis zu einem bestimmten Mindestdruck sein, der z.B. in einem Zellstapel beziehungsweise Batteriemodul maximal auf das Zelltrennelement einwirken kann.

Die Kompressibilität der Kompressionsschicht kann auch lokal unterschiedlich sein. In diesem Fall soll jede Kompressibilität jeden Bereichs der Kompressionsschicht größer sein als die maximale Kompressibilität der jeweiligen Kühlbereiche.

Die Kühlbereiche können beispielsweise durch relativ starre Kühlstrukturen bereitgestellt sein. Besonders vorteilhaft ist es dabei, wenn diese Kühlstrukturen dabei aus Metall sind, da dies zum einen eine besonders gute Wärmeleitung ermöglicht, und andererseits eine besonders dünnwandige Ausgestaltung der Kühlstrukturen bei gleichzeitig möglichst steifer Ausgestaltung der Kühlstrukturen erlaubt. Entsprechend ist es auch bevorzugt, dass zumindest die beiden Außenwände oder die Außenwandung als Ganzes aus einem Metall sind, zum Beispiel Aluminium. Die Kompressionsschicht beziehungsweise das komprimierbare Metall der Kompressionsschicht kann zum Beispiel einen Schaum, insbesondere einen Kunststoffschaum, umfassen. Das Material kann auch weitere Komponenten umfassen, zum Beispiel in einen solchen Schaum integrierte Füllstoffe. Das Material kann also zum Beispiel als gefüllter Schaum ausgebildet sein. Weiterhin kann das Material homogen sein beziehungsweise homogene Materialeigenschaften, wie beispielsweise Härtegrad oder Festigkeit, aufweisen oder mit lokal unterschiedlichen Eigenschaften ausgebildet sein. Beispielsweise kann die Kompressionsschicht in einem mittleren Bereich bezogen auf eine zur ersten Richtung senkrechten zweiten und/oder dritten Richtung kompressibler oder weicher ausgebildet sein als bezüglich der zweiten und/oder dritten Richtung weiter außen liegende Randbereiche der Kompressionsschicht.

Bevorzugt wird das Zelltrennelement zur Kühlung der angrenzenden Batteriezellen verwendet, ohne dass das das Zelltrennelement durchströmende Kühlmittel, welches vorzugsweise eine Kühlflüssigkeit darstellt, in direkten Kontakt mit den Batteriezellen gelangen kann. Entsprechend ist es bevorzugt, dass die Außenwandung fluiddicht ausgestaltet ist, also beispielsweise keine Löcher aufweist oder Ähnliches.

Gemäß einer weiteren vorteilhaften Ausgestaltung der Erfindung verläuft die Kompressionsschicht in einer zur ersten Richtung senkrechten zweiten Richtung wellenförmig oder Zick-Zack-förmig. Ein solcher wellenförmiger beziehungsweise schlangenförmiger oder Zick-Zack-förmiger Verlauf erlaubt eine besonders bauraumsparende Ausgestaltung der Kühlbereiche und entsprechend des Zelltrennelements als Ganzes, insbesondere hinsichtlich seiner Ausdehnung in der ersten Richtung. Durch einen solchen wellenförmigen beziehungsweise Zick-Zack-förmigen Verlauf kann gleichzeitig auch die Geometrie der Kühlkanäle der angrenzenden Kühlbereiche definiert sein. Die Kühlkanäle können sozusagen in der zweiten Richtung zueinander versetzt sein. Dort, wo also zum Beispiel der mindestens eine erste Kühlkanal bezogen auf die erste Richtung eine maximale Abmessung aufweist, kann im korrespondierenden zweiten Kühlbereich kein Kühlkanal angeordnet sein beziehungsweise der im zweiten Kühlbereich angeordnete mindestens eine zweite Kühlkanal kann dort eine deutlich kleinere Abmessung oder minimale Abmessung bezogen auf die erste Richtung aufweisen und umgekehrt.

Daher stellt es eine weitere vorteilhafte Ausgestaltung der Erfindung dar, wenn der mindestens eine erste und zweite Kühlkanal in einer zur ersten und zweiten Richtung senkrechten dritten Richtung verlaufen und in ihrer Anordnung bezüglich der zweiten Richtung zueinander versetzt sind. Insbesondere können der mindestens eine erste und der mindestens eine zweite Kühlkanal dabei parallel zueinander in der dritten Richtung verlaufen. Diese befinden sich bezogen auf die zweite Richtung jedoch auf unterschiedlichen Höhen. Bei Kompression des Zelltrennelements in der ersten Richtung können die Kühlkanäle sozusagen in der zweiten Richtung teilweise überlappen beziehungsweise kollisionsfrei ineinandergreifen. Hierdurch kann das Zelltrennelement in der ersten Richtung deutlich dünner ausgebildet werden.

Ein weiterer großer Vorteil des wellenförmigen oder Zick-Zack-förmigen Verlaufs der Kompressionsschicht besteht zudem darin, dass diese dennoch mit einer im Wesentlichen konstanten Dicke in der ersten Richtung ausgeführt sein kann, wie dies gemäß einer weiteren vorteilhaften Ausgestaltung der Erfindung vorgesehen ist. Demgemäß weist also die Kompressionsschicht eine in der ersten Richtung definierte Dicke zum Beispiel bezogen auf den oben beschriebenen Ausgangszustand bzw. Referenzzustand auf, die konstant ist. Unter Umständen kann es sein, dass bestimmte Bereich des Zelltrennelements während der Verwendung in einem Zellstapel stärker komprimiert werden als andere, woraus resultieren kann, dass die Dicke der Kompressionsschicht beispielsweise dann in einem zentralen Bereich des Zelltrennelements kleiner ist als in entsprechenden Randbereichen.

Durch die Kompressionsschicht kann gleichzeitig auch eine thermische Barriere zwischen den beiden Kühlbereichen bereitgestellt werden, was vor allem im Bereich des thermischen Durchgehens einer Batteriezelle von Vorteil ist. Durch die Ausgestaltung der Kompressionsschicht mit einer im Wesentlichen konstanten Dicke lässt sich eine besonders gleichmäßige thermische Barriere bereitstellen.

Der erste und zweite Kühlbereich können jeweils auch mehrere Kühlkanäle umfassen. Diese können zum Beispiel alle parallel in der dritten Richtung verlaufen. Die ersten Kühlkanäle können dann entsprechend zu den zweiten Kühlkanälen versetzt in Bezug auf die zweite Richtung angeordnet sein, wie bereits mit Bezug auf den mindestens einen ersten Kühlkanal und den mindestens einen zweiten Kühlkanal bereits beschrieben.

Gemäß einer weiteren vorteilhaften Ausgestaltung der Erfindung umfasst das Zelltrennelement eine erste und eine zweite im Innenraum angeordnete Begrenzungswand, zwischen denen die Kompressionsschicht angrenzend an die erste und zweite Begrenzungswand angeordnet ist, wobei die erste Begrenzungswand an den ersten Kühlkanal angrenzt und die zweite Begrenzungswand an den zweiten Kühlkanal angrenzt, insbesondere wobei die erste Begrenzungswand die erste Außenwand an ersten Kontaktstellen stellenweise kontaktiert und die zweite Begrenzungswand die zweite Außenwand an zweiten Kontaktstellen stellenweise kontaktiert. Diese Begrenzungswände können gemäß einer Ausgestaltung auch einstückig mit den Außenwänden ausgebildet sein.

Die Kompressionsschicht ist also angrenzend an die Begrenzungswände und zwischen diesen Begrenzungswänden angeordnet. Die Kompressionsschicht kann dabei den Zwischenraum zwischen diesen Begrenzungswänden vollständig ausfüllen. Denkbar ist es auch, dass sich die Kompressionsschicht in einzelne und voneinander räumlich separierte Kompressionsbereiche gliedern lässt, die jeweils angrenzen an die erste und zweite Begrenzungswand angeordnet sind, und zwischen denen sich beispielsweise ein Hohlraum befindet. Besonders vorteilhaft ist es jedoch, wenn die Kompressionsschicht beziehungsweise das komprimierbare Material den Zwischenraum zwischen den Begrenzungswänden nahezu vollständig oder vollständig ausfüllt, da hierdurch eine besonders gleichmäßige Druckaufnahme und Druckverteilung möglich ist.

Dass die jeweiligen Begrenzungswände die Außenwände an den jeweiligen Kontaktstellen stellenweise kontaktieren, lässt sich zum Beispiel auf einfache Weise dadurch bereitstellen, indem die Begrenzungswände in der zweiten Richtung wellenförmig oder Zick-Zack-förmig verlaufen. Die den betreffenden Außenwänden zugewandten Wellenberge des wellenförmigen Verlaufs beziehungsweise Spitzen des Zick-Zack-förmigen Verlaufs können dann entsprechend die zugeordnete Außenwand kontaktieren, das heißt berühren, und andere Bereiche der Begrenzungswände dagegen nicht. Die Kontaktstellen können entsprechend in der dritten Richtung linienförmig, insbesondere geradlinig, verlaufen und insbesondere parallel zueinander. Durch die Kontaktstellen sind dann z.B. die in der zweiten Richtung nebeneinander angeordneten Kühlkanäle eines gleichen Kühlbereichs voneinander separiert. Durch die Kontaktstellen kann also der Kühlbereich in mehrere einzelne Kühlkanäle untergliedert werden. Die Begrenzungswände können zum Beispiel gewellt ausgeführt sein, zum Beispiel als Wellblech. Die Wellenlänge des wellenförmigen oder Zick-Zack-förmigen Verlaufs kann dabei konstant sein oder ebenfalls in der zweiten Richtung variieren. Dadurch lassen sich zum Beispiel Kühlkanäle mit unterschiedlichen Breiten in der zweiten Richtung bereitstellen. Dadurch dass die jeweiligen Begrenzungswände die korrespondierenden Außenwände stellenweise kontaktieren, sind hierdurch Stützstellen bereitgestellt, mittels welchen die Begrenzungswand gegenüber der zugeordneten Außenwand abgestützt wird. Dies verhindert eine Kompression der zwischen diesen Wänden, nämlich einer jeweiligen Begrenzungswand und der zugeordneten Außenwand, befindlichen Kühlkanäle.

Auch die Begrenzungswände sind vorzugsweise aus einem metallischen Material, zum Beispiel Aluminium.

Gemäß einer weiteren vorteilhaften Ausgestaltung der Erfindung ist der erste Kühlbereich durch eine erste Kühlplatte bereitgestellt, die die erste Außenwand und die erste Begrenzungswand umfasst, der zweite Kühlbereich durch eine zweite Kühlplatte bereitgestellt, die die zweite Außenwand und die zweite Begrenzungswand umfasst, wobei die zwei Kühlplatten in ihren sich bezüglich der zweiten Richtung gegenüberliegenden Randbereichen miteinander gefügt sind. Beispielsweise können diese im Bereich ihrer Randbereiche miteinander verklebt oder verschweißt sein oder Ähnliches. Die Kühlplatten sind dabei insbesondere so geformt, dass sich zwischen den beiden Begrenzungswänden ein Zwischenraum befindet, in dem sich wiederum die Kompressionsschicht befindet. Zur Herstellung eines solchen Zelltrennelements kann zum Beispiel die Kompressionsschicht als separates Bauteil, zum Beispiel als Schaummatte, bereitgestellt sein, die zwischen den beiden Kühlplatten eingelegt oder eingeklebt wird, wobei dann die beiden Kühlplatten miteinander gefügt werden. Es können auch erst die beiden Kühlplatten aneinander gefügt werden und der verbleibende zwischen ihnen befindliche Zwischenraum mit dem Schaummaterial zur Herstellung der Kompressionsschicht ausgefüllt werden.

Diese Ausgestaltung erlaubt eine besonders einfache und vorteilhafte Herstellung des Zelltrennelements. Es sind aber auch noch weitere vorteilhafte Herstellungsmöglichkeiten gegeben, wie diese nachfolgend näher erläutert werden.

Gemäß einer weiteren vorteilhaften Ausgestaltung der Erfindung sind die Kompressionsschicht und die erste und zweite Begrenzungswand unter Ausbildung einer Sandwich-Struktur miteinander gefügt, und die Sandwichstruktur ist in einem die Außenwandung bereitstellenden Gehäuse angeordnet, insbesondere eingelegt. Das Gehäuse kann dabei einteilig oder wiederum mehrteilig, zum Beispiel durch zwei Schalen, die in einem sich bezüglich der zweiten Richtung gegenüberliegenden Randbereich miteinander gefügt sind, bereitgestellt sein. Gemäß dieser Variante kann also beispielsweise zunächst die Sandwich-Struktur gefertigt werden, indem die Kompressionsschicht zwischen den beiden Begrenzungswänden angeordnet wird. Die einzelnen Schichten, das heißt die beiden Begrenzungswände und die Kompressionsschicht, können dabei aneinander anhaften, zum Beispiel fertigungsbedingt oder mittels Klebstoff. Diese fertige Sandwich-Struktur kann dann zwischen den beiden das Gehäuse bereitstellend Schalenhälften eingelegt werden, die dann miteinander gefügt werden. Durch die wellenförmige Struktur beziehungsweise Zick-Zack-förmige Struktur der Begrenzungsseiten kann sich die Sandwich-Struktur im Innenraum selbst unter Ausbildung der jeweiligen ersten und zweiten Kühlkanäle durch Einlegen im Innenraum positionieren, ohne stoffschlüssig oder auf andere Weise fixiert werden zu müssen.

Gemäß einer weiteren vorteilhaften Ausgestaltung der Erfindung sind die Außenwandung und die Begrenzungswände einteilig, insbesondere als ein Strangpressprofil, ausgebildet. Der Zwischenraum zwischen den Begrenzungswänden kann auf einfache Weise mit dem Schaummaterial zur Ausbildung der Kompressionsschicht ausgefüllt werden. Auch dies erlaubt eine besonders einfache und effiziente Fertigung, die mit besonders wenig Einzelbauteilen auskommt. Separate Fügeschritte können somit entfallen.

Gemäß einer weiteren vorteilhaften Ausgestaltung der Erfindung umfasst das Zelltrennelement einen Kühlmittelzuführanschluss und einen Kühlmittelabführanschluss, die in sich bezüglich der dritten Richtung gegenüberliegenden Endbereichen des Zelltrennelements angeordnet sind. Diese Anschlüsse können als separate Bauteile ausgeführt sein und an die Außenwandung, insbesondere an die sich bezüglich der dritten Richtung gegenüberliegenden Stirnseiten der Außenwandung angefügt sein, oder die Anschlüsse können auch selbst als Teile der Wandung ausgeführt sein oder aus diesen ausgebildet sein. Über den Kühlmittelzuführanschluss kann also vorteilhafterweise dem Zelltrennelement, insbesondere dem Innenraum, ein Kühlmittel zugeführt werden, das über den Kühlmittelabführanschluss nach Durchlaufen des Innenraums beziehungsweise des mindestens einen ersten und zweiten Kühlkanals wieder aus dem Zelltrennelement abgeführt werden kann.

Das Zelltrennelement kann in einer weniger bevorzugten Ausführungsform aber auch ohne Kühlmittelanschlüsse ausgeführt sein und als solches in einem Zwischenraum zwischen zwei Batteriezellen positioniert sein. Der Aufnahmeraum, in dem sich der Zellstapel befindet, kann dann als Ganzes oder zumindest teilweise von einem Kühlmittel durchströmt werden. Dieses kann dann entsprechend auch die zwischen den Batteriezellen befindlichen Zelltrennelemente durch ihre jeweiligen Kühlkanäle durchströmen.

Des Weiteren betrifft die Erfindung auch ein Batteriemodul mit einem erfindungsgemäßen Zelltrennelement oder einer seiner Ausführungsformen. Das Batteriemodul kann dabei den Zellstapel mit den mindestens zwei Batteriezellen umfassen, zwischen denen das Zelltrennelement angeordnet ist. Ein solcher Zellstapel kann aber auch deutlich mehr als zwei Batteriezellen umfassen, wobei zwischen je zwei zueinander in Stapelrichtung benachbart angeordneten Batteriezellen ein erfindungsgemäßes Zelltrennelement oder eine seiner Ausführungsformen angeordnet sein kann. Das Batteriemodul kann dabei also auch mehrere solcher Zelltrennelemente umfassen.

Darüber hinaus kann das Batteriemodul beziehungsweise der Zellstapel ausgestaltet sein wie bereits im Zusammenhang mit dem erfindungsgemäßen Zelltrennelement und seinen Ausführungsformen erläutert.

Des Weiteren betrifft die Erfindung auch eine Batterie, insbesondere eine Hochvoltbatterie, mit einem erfindungsgemäßen Batteriemodul oder eine seine Ausgestaltungen.

Des Weiteren betrifft die Erfindung auch ein Kraftfahrzeug mit einer erfindungsgemäßen Batterie oder eine ihrer Ausgestaltungen.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Zu der Erfindung gehören auch Weiterbildungen des erfindungsgemäßen Batteriemoduls und der erfindungsgemäßen Batterie, die Merkmale aufweisen, wie sie bereits im Zusammenhang mit den Weiterbildungen des erfindungsgemäßen Zelltrennelements beschrieben worden sind. Aus diesem Grund sind die entsprechenden Weiterbildungen des erfindungsgemäßen Batteriemoduls und der erfindungsgemäßen Batterie hier nicht noch einmal beschrieben.

Zur Erfindung können auch Herstellungsverfahren zur Herstellung eines erfindungsgemäßen Zelltrennelements oder einer seiner Ausführungsformen gehören, wie sie z.B. im Zusammenhang mit den Beschreibungen des Zelltrennelements und seinen Ausführungsformen beschreiben worden sind.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine schematische Darstellung eines Batteriemoduls mit einem zwischen zwei Batteriezellen angeordneten Zelltrennelement in einem unkomprimierten Ausgangszustand gemäß einem Ausführungsbeispiel der Erfindung;
- Fig. 2: eine schematische Darstellung des Batteriemoduls aus Fig. 1 mit dem Zelltrennelement in einem komprimierten Zustand gemäß einem Ausführungsbeispiel der Erfindung;
- Fig. 3: eine schematische Darstellung eines Zelltrennelements gemäß einem weiteren Ausführungsbeispiel der Erfindung;
- Fig. 4: eine schematische Darstellung eines Teils eines Batteriemoduls mit einem Zelltrennelement gemäß einem weiteren Ausführungsbeispiel der Erfindung; und
- Fig. 5: eine schematische Darstellung eines Zelltrennelements in einer Draufsicht gemäß einem Ausführungsbeispiel der Erfindung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

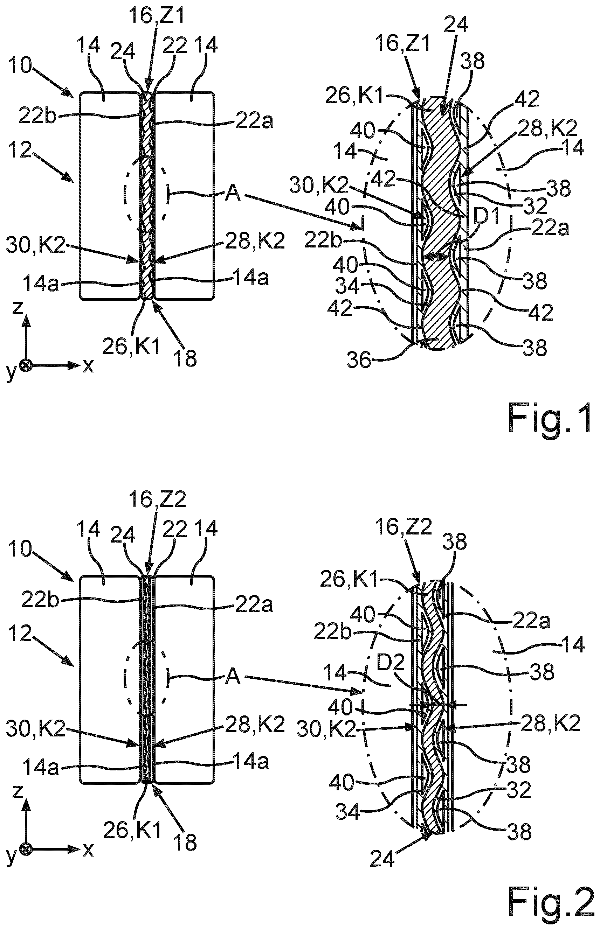

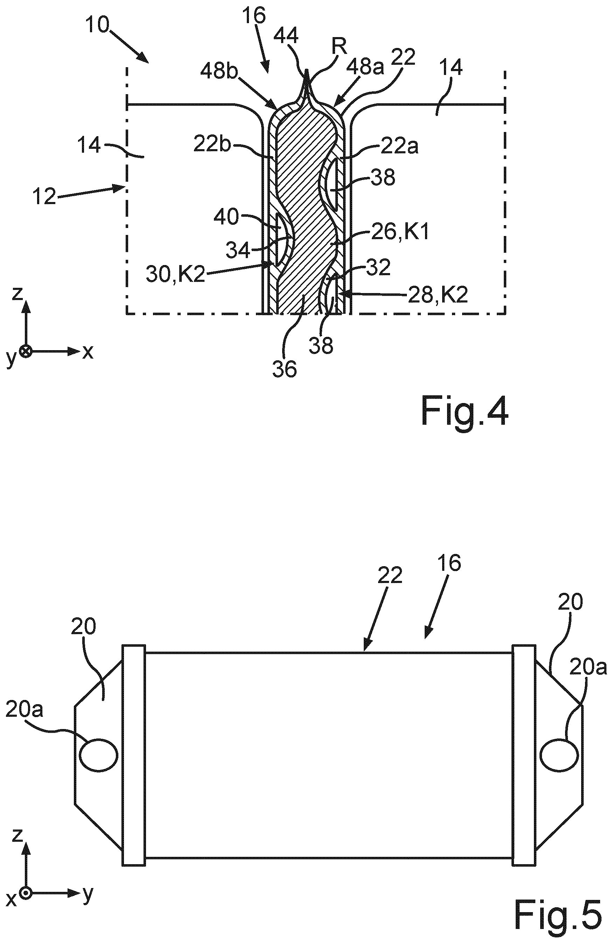

Fig. 1 zeigt eine schematische Darstellung eines Batteriemoduls 10 mit einem Zellstapel 12 und einem zwischen zwei Batteriezellen 14 des Zellstapels 12 angeordneten Zelltrennelement 16 in einem unkomprimierten Ausgangszustand Z1 gemäß einem Ausführungsbeispiel der Erfindung. Ein Ausschnitt A des Batteriemoduls 10 im Bereich des Zelltrennelements 16 ist nochmal vergrößert in Fig. 1 dargestellt. Das Batteriemodul 10 beziehungsweise das Zelltrennelement 16 ist dabei insbesondere einer Seitenansicht ohne dargestellte Kühlmittelzu- oder -abführanschlüsse 20 (vgl. Fig. 5) dargestellt beziehungsweise in einer Querschnittsdarstellung senkrecht zur dargestellten y-Achse. Vom Zellstapel 12 sind exemplarisch zwei Batteriezellen 14 dargestellt, wobei der Zellstapel 12 auch mehr als zwei Batteriezellen 14 umfassen kann. Die Batteriezellen 14 sind dabei in einer Strömung x nebeneinander angeordnet, die zur vorgenannten ersten Richtung korrespondiert, wenn das Zelltrennelement 16 bestimmungsgemäß, wie vorliegend dargestellt, zwischen zwei Batteriezellen 14 angeordnet ist. Das Zelltrennelement 16 kann sich dabei in x- und/oder y- und/oder z-Richtung über den gesamten Zwischenraum 18 oder nahezu den gesamten Zwischenraum 18 erstrecken. Die optionalen Anschlüsse 20 (vergleiche Fig. 5) des Zelltrennelements 16 können dabei zum Beispiel in und entgegen y-Richtung aus diesen Zwischenraum 18 herausstehen.

Das Zelltrennelement 16 umfasst nun eine Außenwandung 22, die wiederum eine erste Außenwand 22a und eine zweite Außenwand 22b bereitstellt, die sich in x-Richtung gegenüberliegen. Die jeweiligen Außenwände 22a, 22b können dabei eben ausgestaltet sein und an die benachbarten Zellseiten 14a der Batteriezellen 14 angrenzen, insbesondere an diesen flächig anliegen. Die Außenwandung 22 umgibt bzw. umschließt einen Innenraum 24 des Zelltrennelements 16. Das Zelltrennelement 16 umfasst zudem eine im Innenraum 24 angeordnete Kompressionsschicht 26 sowie einen ersten Kühlbereich 28 und einen zweiten Kühlbereich 30. Die Kompressionsschicht 26 ist dabei bezüglich der x-Richtung zwischen den beiden Kühlbereichen 28, 30 angeordnet. Die Kompressionsschicht 26 weist dabei eine erste Kompressibilität K1 auf, die zumindest bezüglich der x-Richtung größer ist als eine den Kühlbereichen 28, 30 zugeordnete Kompressibilität K2.

Das Zelltrennelement 16 umfasst zudem eine erste Begrenzungswand 32 und eine zweite Begrenzungswand 34, die beidseitig an die Kompressionsschicht 26 angrenzen. Insbesondere kann die Kompressionsschicht 26 den Zwischenraum 36 zwischen den beiden Begrenzungswänden 32, 34 zumindest teilweise oder vollständig wie in diesem Beispiel ausfüllen. Der erste Kühlbereich 28 kann die erste Außenwand 22a, die erste Begrenzungswand 32 und zwischen diesen Wänden 22a, 32 angeordnete und durch die Wände 22a, 32 begrenzte erste Kühlkanäle 38 umfassen. Entsprechend kann der zweite Kühlbereich 30 die zweite Außenwand 22b, die zweite Begrenzungswand 34 und die zwischen diesen Wänden 22b, 34 befindlichen und durch diese begrenzten zweiten Kühlkanäle 40 umfassen.

Die Kompressionsschicht 26 verläuft bezüglich der z-Richtung wellenförmig. Dies lässt sich auf einfache Weise dadurch bereitstellen, indem die Begrenzungswände 32, 34 wellenförmig verlaufen. Jede dieser Begrenzungswände 32, 34 kontaktiert dabei entsprechend eine betreffende Außenwand 22a, 22b an jeweiligen Kontaktstellen 42 oder Kontaktbereichen. Die Außenwandung 22 und die Begrenzungswände 32, 34 können aus einem metallischen Material, zum Beispiel Aluminium oder Stahl gebildet sein. In diesem Beispiel sind die Außenwandung 22 und die Begrenzungswände 32, 34 einstückig ausgeführt, z.B. als Strangpressprofil. Durch den wellenförmigen Verlauf der Kompressionsschicht 26 lässt sich eine besonders bauraumsparende Anordnung bereitstellen, da somit auch die ersten Kühlkanäle 38 zu den zweiten Kühlkanälen 40 bezüglich der z-Richtung versetzt angeordnet sein können.

Die Kompressionsschicht 26 kann zum Beispiel aus einem Schaummaterial, zum Beispiel einem Kunststoffschaum oder Ähnliches gebildet sein. Durch die Außenwandung 22 kann eine metallische Außenhaut bereitgestellt sein, in der die Kühlkanäle 38, 40 integriert sind. Durch die größere Kompressibilität K1 der Kompressionsschicht 26 kann es erreicht werden, dass die Kanäle 38, 40 während dem Swellingprozess der Batteriezellen 14 in ihrer Geometrie und dem Querschnitt nicht oder zumindest nicht signifikant verändert werden. Zwischen den äußeren Bereichen, nämlich den Kühlbereichen 28, 30 ist also ein Material, aus dem die Kompressionsschicht 26 gebildet ist, eingesetzt, das sich komprimieren lässt. Dieses kann auch als Kern bezeichnet werden. Dabei kann es sich um ein homogenes Material handeln, insbesondere einen Schaum, zum Beispiel einen PU (Polyurethan)-Schaum, einen EPDM (Ethylen-Propylen-Dien-Monomer)-Schaum oder einen anderen technischen Schaum. Somit kann im Betrieb das Kühlmedium lediglich durch die Kühlkanäle 38, 40 strömen und nicht durch den Schaumkern, der durch die Kompressionsschicht 26 bereitgestellt ist. Beim Swellen, d.h. Anschwellen der Zellen 14, kann der Schaumkern 26 dieses durch das Zelltrennelement 16 bereitgestellten Kühlkörpers deformiert werden, und der sich veränderlichen Zellgeometrie über die Lebensdauer folgen, insbesondere reversibel für Swellingwege, die zu einem Ladezustand der Zellen 14 von 0% bis 100% SOC (State of Charge) korrespondieren und/oder irreversibel für Swellingwege über Lebenslaufzeit.

Fig. 2 zeigt noch einmal eine schematische Darstellung des Batteriemoduls 10 aus Fig. 1, wobei sich nunmehr das Zelltrennelement 16 in einem komprimierten Zustand Z2 befindet, der durch ein solches Zellswelling hervorgerufen sein kann. Die zumindest im Ausgangszustand Z1 vorzugsweise konstante Dicke D1 der Kompressionsschicht 26 kann im komprimierten Zustand Z2 des Zelltrennelements 16 entsprechend kleiner sein, wobei diese kleinere Dicke mit D2 bezeichnet ist. Wie in Fig. 2 zu sehen ist, komprimiert sich lediglich die Kompressionsschicht 26, und die jeweiligen Querschnitte der Kühlkanäle 38, 40 bleiben hinsichtlich Geometrie und Fläche unverändert.

Die Kompressionsschicht 26 kann auch lokal unterschiedliche Schaumdichten aufweisen. Über unterschiedliche Schaumdichten kann die Festigkeit des Systems an Swellinganforderungen zwischen Zellmitte und Zellrand bezogen auf die dargestellte y- und/oder z-Richtung angepasst werden bzw. sein. Ein komplettes Zusammendrücken des Kühlkörpers, das heißt des Zelltrennelements 16 ist nicht möglich, da sich die Kühlkanäle 38, 40 an der jeweils gegenüberliegenden Seite abstützen können. Die Steifigkeit der Kanäle 38, 40 ist zudem vorzugsweise höher als die Swellingkraft der Zellen, insbeosndere dergestalt, dass sie die Kanäle 38, 40 bzw. die die Kanäle 38, 40 begrenzenden Wände 22a und 32 bzw. 22b und 34 der Swellingkraft der Zellen 14 standhalten. Bevorzugt sind die Kanäle 38, 40 wie beschrieben versetzt angeordnet, sodass ein maximal kompaktes Bauteil mit größtmöglichem Swellingweg dargestellt werden kann.

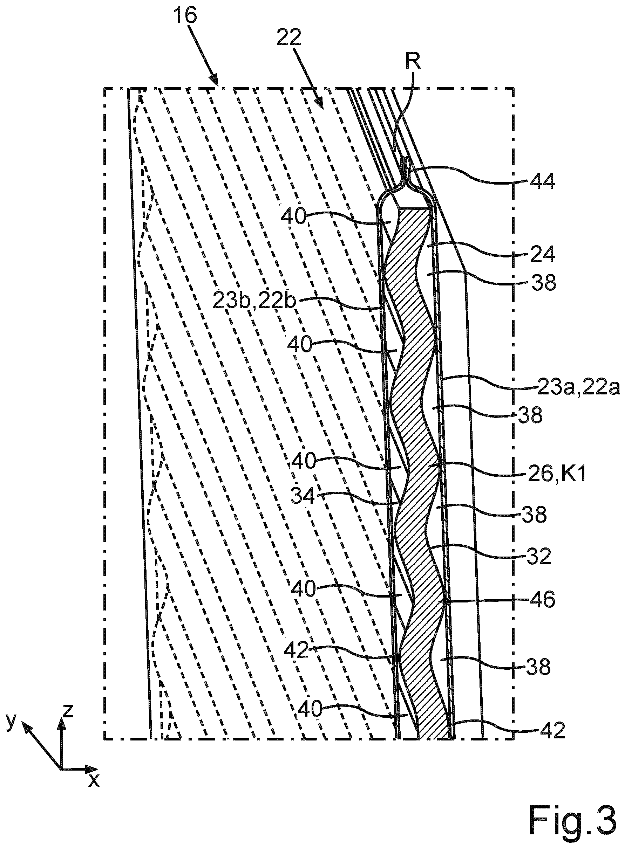

Fig. 3 zeigt eine schematische und perspektivische Querschnittsdarstellung eines Teils eines Zelltrennelements 16 gemäß einem weiteren Ausführungsbeispiel der Erfindung. Dieses kann wie zuvor beschrieben ausgebildet sein, bis auf die nachfolgend beschriebenen Unterschiede. In diesem Fall ist die Außenwandung 22 durch zwei Schalenhälften 23a, 23b gebildet, die in zwei sich bezüglich der z-Richtung gegenüberliegenden Randbereichen R, von denen vorliegend nur einer zu sehen ist, über eine Fügeverbindung, zum Beispiel Kleben und/oder Schweißen, miteinander verbunden sind. Die Fügeverbindung ist mit 44 bezeichnet. Jede dieser Schalen 23a, 23b stellt eine der Außenwände 22a, 22b bereit. Die Begrenzungswände 32, 34 bilden zusammen mit der Kompressionsschicht 26 ein Sandwichbauteil 46, das im Innenraum 24 des Zelltrennelements 16 angeordnet ist. Das Sandwichbauteil 46 kann zum Beispiel lediglich in den Innenraum 24 eingelegt sein. In diesem Fall sind also die Außenwände 22a, 22b und die beiden Begrenzungswände 32, 34 nicht einstückig als Strangpressprofil ausgebildet, sondern als separate Bauteile ausgeführt.

Fig. 4 zeigt eine schematische Darstellung eines Teils eines Batteriemoduls 10 mit einem Zelltrennelement 16 gemäß einem weiteren Ausführungsbeispiel der Erfindung. Dieses kann insbesondere wie zu Fig. 1 und zu Fig. 2 beschrieben ausgebildet sein, bis auf die nachfolgend beschriebenen Unterschiede. In diesem Beispiel sind die jeweiligen Kühlbereiche 28, 30 durch zwei Kühlplatten 48a, 48b bereitgestellt. Die beiden Kühlplatten können in einem Randbereich R beziehungsweise in zwei sich bezüglich der z-Richtung gegenüberliegenden Randbereichen R, von denen wiederum lediglich einer dargestellt ist, über eine Fügeverbindung 44 miteinander gefügt sein. Jede dieser Kühlplatten 48a, 48b umfasst eine der Außenwände 22a, 22b, sowie eine der Begrenzungswände 32, 34. Die Wände 22a, 32 beziehungsweise 22b, 34 einer jeweiligen Kühlplatte 48a, 48b können dabei auch einstückig ausgebildet sein, zum Beispiel als Strangpressprofile ausgebildet sein oder mittels Roll-Bond-Verfahren gefertigt sein oder Ähnliches. In diesem Fall können also beispielsweise zunächst die Kühlplatten 48a, 48b als separate Bauteile bereitgestellt werden und diese dann über die Fügeverbindung 44 miteinander verbunden werden. Vor dem Verbinden kann zwischen den Platten 48a, 48b die Kompressionsschicht 26 als fertige Schaumschicht eingelegt werden oder an eine der beiden Begrenzungsseiten 32, 34 angeklebt werden, oder die Kompressionsschicht 26 kann auch nach dem Fügen der beiden Platten 48a, 48b in viskoser Schaumform in den Zwischenraum 36 eingespritzt werden und sich danach verfestigen bzw. aushärten.

Fig. 5 zeigt eine schematische Darstellung eines Zelltrennelements 16 in einer Draufsicht auf die x-Richtung. Das Zelltrennelement 16 umfasst in diesem Fall noch Schnittstellen 20 für die Kühlmittelversorgung, nämlich einen Kühlmittelzuführanschluss 20 und einen Kühlmittelabführanschluss. Diese Anschlüsse 20 sind bezüglich der y-Richtung beidseitig an der Außenwandung 22 des Zelltrennelements 16 angeordnet. Die Schnittstellen 20 können jeweils in Form eines umspritzten Rahmens oder als seitlich liegende Wasserkästen ausgeführt sein. Sie können mit Stutzen 20a ausgeführt sein oder ähnlichen Anschlüssen, um zum Beispiel eine Kühlmittelleitung anzuschließen, um das Kühlmittel in das Zelltrennelement 16 einzuführen und aus diesem wieder abzuführen. Alternativ kann das Zellpaket, das heißt der Zellstapel 12 inklusive des durch das Zelltrennelement 16 bereitgestellten Zwischenzellkühlers, direkt im Kühlmittel stehen und durch die Druckdifferenz zwischen Vor- und Rücklauf strömt das Kühlmittel zwischen die Zellen 14 durch die Kühlplatten beziehungsweise Kühlbereiche 28, 30 des Zelltrennelements 16. In diesem Fall können auf die Anschlüsse 20 verzichtet werden.

Insgesamt zeigen die Beispiele, wie durch die Erfindung ein Zwischenzellkühler mit Swellingkompensation bereitgestellt werden kann. Zur besseren Kühlung von vor allem prismatischen Zellen in einem Zellstack kann eine Kühlung zwischen den Zellen eingebaut werden, die durch das zuvor beschriebene Zelltrennelement bereitgestellt wird. Der Kühlkörper kann dabei so aufgebaut sein, dass die Funktionen Kühlen und Swelling in einem Bauteil umgesetzt werden können. Hierdurch kann eine effektive, direkte Kühlung mit gleichbleibendem Kühlkanalquerschnitt unter Berücksichtigung einer Swellingkompensation von Lebensdaueranfang bis Lebensdauerende des Batteriemoduls bereitgestellt werden. Das beschriebene Zelltrennelement ermöglicht eine sehr hohe Funktionsintegration und eine Reduktion der Komplexität einer Hochvoltbatterie durch Zusammenführung der Funktionen von Zwischenzelltrennelementen zur Swellingkompensation und einer Batteriekühlung. Dies ermöglicht eine Steigerung der Kühlperformance durch eine Steigerung der angebundenen Kühlfläche. Zudem ermöglicht dies auch eine Kostenreduktion durch Wegfall von teuren Wärmeleitpasten zur thermischen Anbindung an die Zellen und eine Kostenreduktion durch Wegfall von Isolationsmaterial zwischen den Zellen gegen thermische Propagation, da diese Funktionalität ebenfalls von der Kompressionsschicht übernommen werden kann.

## Patentansprüche

1. Zelltrennelement (16) zur Anordnung zwischen zwei Batteriezellen (14) eines Zellstapels (12), wobei das Zelltrennelement (16) umfasst
- eine Außenwandung (22), die einen Innenraum (24) des Zelltrennelements (16) umschließt, und die eine erste Außenwand (22a) und eine bezüglich einer ersten Richtung (x) gegenüberliegende zweite Außenwand (22b) bereitstellt,
- einen im Innenraum (24) befindlichen ersten Kühlbereich (28), der an die erste Außenwand (22a) angrenzt, und der mindestens einen von einem Kühlmittel durchströmbaren ersten Kühlkanal (38) umfasst, und
- einen im Innenraum (24) befindlichen zweiten Kühlbereich (30), der an die zweite Außenwand (22b) angrenzt, und der mindestens einen von einem Kühlmittel durchströmbaren zweiten Kühlkanal (40) umfasst,
**dadurch gekennzeichnet, dass**
das Zelltrennelement (16) eine im Innenraum (24) angeordnete Kompressionsschicht (26) aus einem elastisch deformierbaren Material umfasst, wobei die Kompressionsschicht (26) bezüglich der ersten Richtung (x) zwischen dem ersten und zweiten Kühlbereich (28, 30) angeordnet ist, und wobei eine der Kompressionsschicht (26) zugeordnete erste Kompressibilität (K1) zumindest bezüglich der ersten Richtung (x) größer ist als eine jeweilige dem ersten und zweiten Kühlbereich (28, 30) zugeordnete zweite Kompressibilität (K2).

2. Zelltrennelement (16) nach Anspruch 1,
**dadurch gekennzeichnet, dass**
die Kompressionsschicht (26) in einer zur ersten Richtung (x) senkrechten zweiten Richtung (z) wellenförmig oder Zick-Zack-förmig verläuft.

3. Zelltrennelement (16) nach einem der vorhergehenden Ansprüche, **dadurch gekennzeichnet, dass**
die Kompressionsschicht (26) eine in der ersten Richtung (x) definierte Dicke (D1, D2) aufweist, die im unkomprimierten Zustand (Z1) des Zelltrennelements (16) konstant ist.

4. Zelltrennelement (16) nach einem der vorhergehenden Ansprüche, **dadurch gekennzeichnet, dass**
der mindestens eine erste und zweite Kühlkanal (38, 40) in einer zur ersten und zweiten Richtung (x, z) senkrechten dritten Richtung (y) verlaufen und in ihrer Anordnung bezüglich der zweiten Richtung (z) zueinander versetzt sind.

5. Zelltrennelement (16) nach einem der vorhergehenden Ansprüche, **dadurch gekennzeichnet, dass**
das Zelltrennelement (16) eine erste und eine zweite im Innenraum (24) angeordnete Begrenzungswand (32, 34) umfasst, zwischen denen die Kompressionsschicht (26) angrenzend an die erste und zweite Begrenzungswand (32, 34) angeordnet ist, wobei die erste Begrenzungswand (32) an den ersten Kühlkanal (38) angrenzt und die zweite Begrenzungswand (34) an den zweiten Kühlkanal (40), insbesondere wobei die erste Begrenzungswand (32) die erste Außenwand (22a) an ersten Kontaktstellen (42) stellenweise kontaktiert und die zweite Begrenzungswand (34) die zweite Außenwand (22b) an zweiten Kontaktstellen (42) stellenweise kontaktiert.

6. Zelltrennelement (16) nach einem der vorhergehenden Ansprüche, **dadurch gekennzeichnet, dass**
- der erste Kühlbereich (28) durch eine erste Kühlplatte (48a) bereitgestellt ist, die die erste Außenwand (22a) und die erste Begrenzungswand (32) umfasst,
- der zweite Kühlbereich (30) durch eine zweite Kühlplatte (48b) bereitgestellt ist, die die zweite Außenwand (22b) und die zweite Begrenzungswand (34) umfasst,
- wobei die zwei Kühlplatten (48a, 48b) in ihren sich bezüglich der zweiten Richtung (x) gegenüberliegenden Randbereichen (R) miteinander gefügt sind.

7. Zelltrennelement (16) nach einem der vorhergehenden Ansprüche, **dadurch gekennzeichnet, dass**
die Kompressionsschicht (26) und die erste und zweite Begrenzungswand (32, 34) unter Ausbildung einer Sandwich-Struktur miteinander gefügt sind und die Sandwichstruktur (46) in einem die Außenwandung (22) bereitstellenden Gehäuse (23a, 23b) angeordnet ist, insbesondere eingelegt ist.

8. Zelltrennelement (16) nach einem der vorhergehenden Ansprüche, **dadurch gekennzeichnet, dass**
die Außenwandung (22) und die Begrenzungswände (32, 34) einteilig, insbesondere als ein Strangpressprofil, ausgebildet sind.

9. Zelltrennelement (16) nach einem der vorhergehenden Ansprüche, **dadurch gekennzeichnet, dass**
das Zelltrennelement (16) einen Kühlmittelzuführanschluss (20, 20a) und eine Kühlmittelabführanschluss (20, 20a) umfasst, die in sich bezüglich der dritten Richtung (y) gegenüberliegenden Endbereichen des Zelltrennelements (16) angeordnet sind.

10. Batteriemodul (10) mit einem Zelltrennelement (16) nach einem der vorhergehenden Ansprüche.
